# EUROPEAN PATENT SPECIFICATION

(11) **EP 3 781 874 B1**
(45) Date of publication and mention of the grant of the patent: **18.03.2026**
(21) Application number: 19726192.8
(22) Date of filing: 18.04.2019
(51) Int. Cl.: F24D 3/10, F16L 55/053, F16L 55/054

(54) **SINGLE LAYER EXPANSION TANK MEMBRANE**
EINLAGIGE MEMBRAN EINES EXPANSIONSGEFÄSSES
MEMBRANE DE VASE D'EXPANSION MONOCOUCHE

(30) Priority: 19.04.2018 NL 2020797
(43) Date of publication of application: 24.02.2021
(73) Proprietor: Aalberts hfc B.V., 1358 DB Almere (NL)
(72) Inventor: TIMMERMAN, Jan Hendrik, 2803 RC Gouda (NL); REEZIGT, Herman, 8072 HJ Nunspeet (NL)
(74) Representative: EP&C
(86) International application number: PCT/NL2019/050232
(87) International publication number: WO 2019/203648

(56) References cited:
- EP-A1- 0 193 077
- WO-A2-2013/151441
- WO-A2-2016/203275
- KR-A- 20120 113 432
- US-A- 5 880 198
- US-A- 6 016 841
- US-A1- 2007 167 569
- US-A1- 2011 223 439
- US-A1- 2013 180 993
- US-B2- 8 470 922
- US-B2- 9 366 373

## Description

### Technical Field

The current invention relates to an expansion tank comprising a single layer membrane.

### Background art

An expansion tank or expansion vessel protects closed (not open to atmospheric pressure) liquid systems from excessive pressure building up in the system. The tank absorbs excess liquid pressure caused by thermal expansion. Expansion tanks can often be found in domestic central heating systems, but they are also known to serve other purposes, for example in suspension systems for vehicles.

The working principle of an expansion tank is based on the principle that a gas, different from a liquid, is compressible. An expansion tank consists of two compartments separated by a flexible membrane. One side of the expansion tank is connected to the piping of the heating system and therefore contains a liquid, which is often water. The other side contains air under pressure, and normally a valve, such as e.g. a Schrader valve for checking pressures and adding air. When the heating system is empty or at the low end of the normal range of working pressure, the membrane is pushed against the liquid inlet. As the liquid volume, and thereby the pressure increases, for example due to a temperature increase, the membrane moves and thereby compresses the air on its other side. When expansion tanks are used in domestic drinking water systems, the membrane and the tank must conform to drinking water regulations.

It will be clear that expansion tank membranes should be able to withstand a large number of pressure cycles, in which the membrane is expanded and retracted as a result of pressure variations within the system. After a certain amount of cycles, fatigue can cause damage to a membrane, which increases the water and gas permeability of a membrane.

The number of cycles a membrane should be able to withstand without a significant loss of barrier properties is determined by NEN 13831:2007. In this test, an expansion tank with a membrane is subjected to continuous cyclic stressing, optionally at an elevated temperature. Pressurised water is pumped into the tank until it is filled to 50% of the content of the chamber. The membrane expands and then the pressure is released again. After the cyclic test, once the tank has cooled down (if the test was performed at elevated temperature, e.g. 75°C), the gas side of the vessel is filled with air to 1,5 bar. The pressure drop within the following hour shall not exceed 0,15 bar.

Expansion tank membranes often consist of vulcanized rubber, such as styrenebutadiene (SBR) rubber or bromobutyl rubber (BiiR). Also expansion tank membranes comprising EPDM rubber are known (e.g. from US 9366373 B2, EP 0193077 A1, US 2013/180993 A1, and WO 2016/203275 A2), as well as other membranes comprising EPDM (US 6016841 A, US 2007/167569 A1, and US 2011/223439 A1). However, due to the need for vulcanization, the manufacturing of such membranes may be cumbersome, and due to the presence of the vulcanizing agents and accelerators, the resulting membranes are not always suitable for use with potable water. For use with potable water, other materials are preferred. Moreover, vulcanized rubber tends to let through small amounts of oxygen and water over time. This leads to air bubbles in the system, and to water in the air compartment of the expansion tank. This causes a gradual decrease of the function of the expansion tank, up to the point where the air compartment contains too little air and the pressure drops under a critical value of 0,2 bar. At that point the expansion tank does not perform its function anymore. Vulcanized rubber based expansion tank membranes have a maximum lifespan of about 15 years under standard conditions. Due to the cross-linking of the rubber, conventional expansion tank membranes cannot easily be recycled. For example, they cannot be molten and reshaped.

Membranes with improved gas barrier properties may be made of thermoplastic materials, e.g. thermoplastic polyurethane (TPU), such as disclosed in WO 2013/170323. TPU is relatively cheap, easy to process, elastic and less sensitive to bacteria in comparison to alternative thermoplastic materials. Nevertheless, TPU membranes are still relatively permeable to water.

Expansion tank membranes comprising multiple layers are also known. By using multiple layers, the properties that one layer is lacking, e.g. water impermeability, may be given to the membrane by adding an extra barrier layer on top of another layer, such that the total membrane has the desired water and gas impermeability, as well as durability. However, the production of expansion tank membranes comprising multiple layers is complicated. It may for example require the production of two or more separate membranes which are then stacked on top of each other. The present invention aims to overcome the abovementioned drawbacks in expansion tank membranes, or at least to provide a useful alternative. Therefore, it is an objective of the present invention to provide an expansion tank membrane with adequate water barrier properties. It is another objective of the current invention to provide an expansion tank membrane with adequate gas barrier properties. It is a further objective of the current invention to provide an expansion tank membrane which can easily be produced. It is a further objective of the current invention to provide an expansion tank membrane with adequate mechanical properties. It is another objective of the present invention to provide a membrane for an expansion tank which can be recycled. Also an expansion tank is provided.

### Summary of invention

To reach at least one of said objectives, in a first aspect the present invention provides an expansion tank comprising a single layer membrane, the membrane comprising at least a thermoplastic olefin block copolymer TOBC (which is the same as an olefinic thermoplastic elastomer copolymer (OTPE)).

A membrane for an expansion tank can separate two compartments of an expansion tank. This means that such a membrane requires a peripheral edge which is configured to be clenched between a first housing part and a second housing part of an expansion tank. The membrane may for example have a beaded circumferential edge.

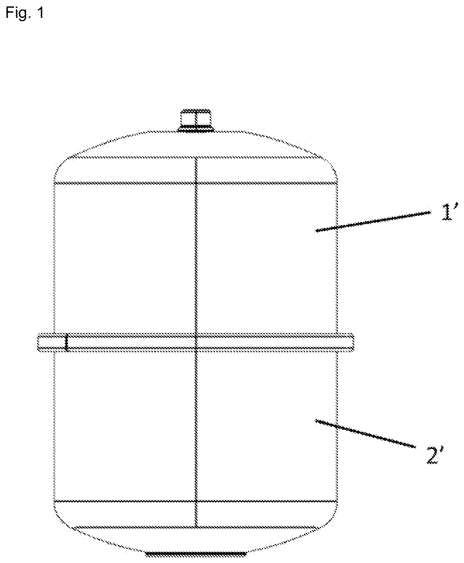

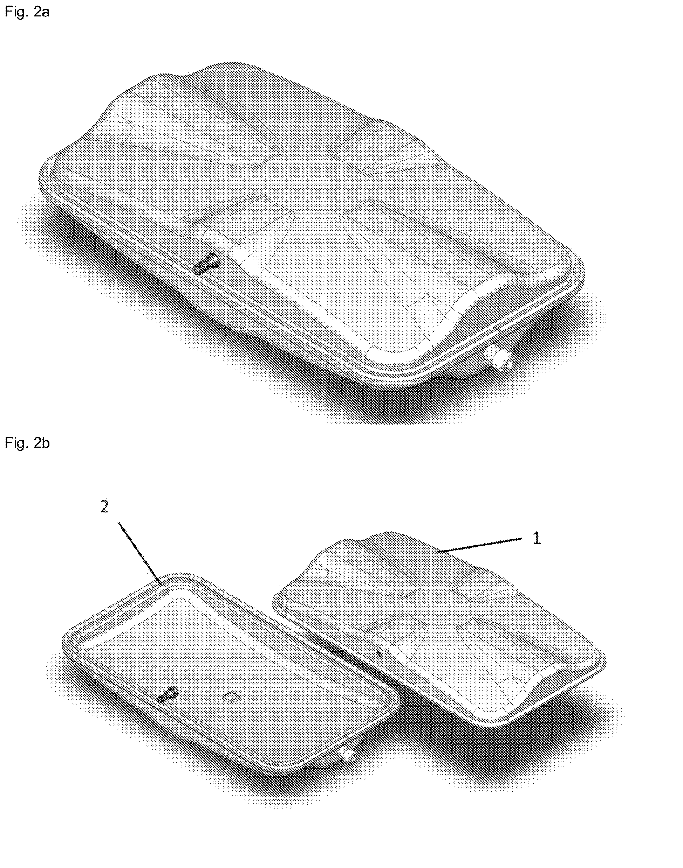

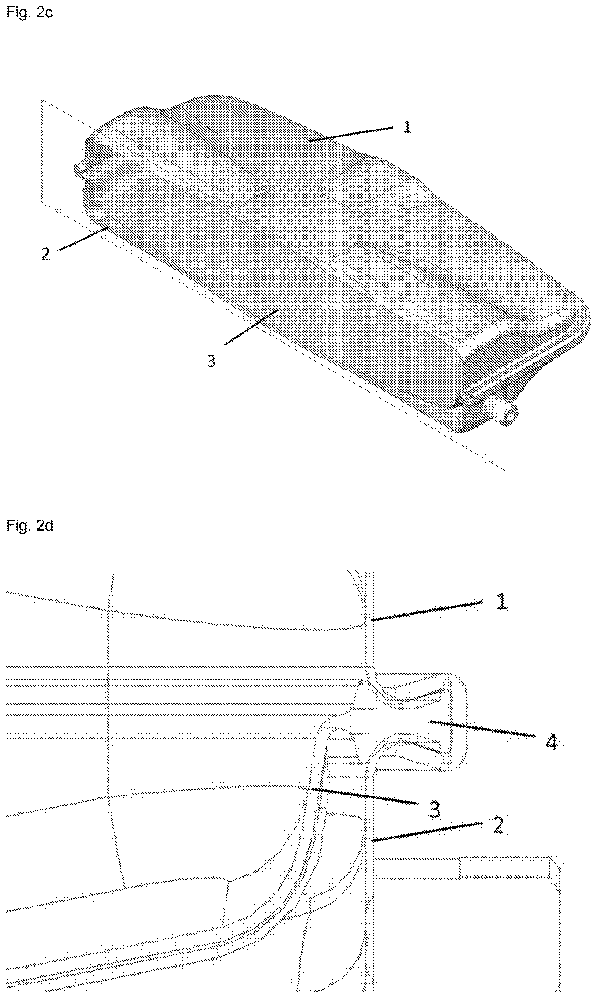

Expansion tanks may be cylindrical (Fig. 1) or have a rectangular shape (Fig. 2), depending on the application.

Because the membrane only consists of a single layer, it can easily be produced in a single step by, for example, injection molding or blow molding. Because there is no need to stack different membranes on top of each other, such as for multi-layer membranes, the production process is relatively quick and easy. Furthermore, because the membrane comprises a thermoplastic elastomer, more specifically an olefinic thermoplastic elastomer copolymer, an expansion tank membrane with the desired properties (flexibility, low gas permeation, low water permeation) can be obtained without any chemical cross-linking.

Instead of chemically cross-linked, thermoplastic elastomer copolymers, thus also *olefinic* thermoplastic elastomer copolymers, are cross-linked by physical interactions. The polymer chains of the thermoplastic elastomer copolymers comprise blocks of at least two different incompatible repeating units, so called soft segments and hard segments. At least two hard segments are present in order to form a cross-linked network. The hard segments will phase separate from the soft segments, forming *physical* cross-links (as opposed to *chemical* cross-links in the case of e.g. vulcanized rubber) in a matrix of the soft segment polymer, provided the soft segment polymer is the dominant segment.

Generic classes of thermoplastic elastomer copolymers are: styrenic block copolymers, thermoplastic polyurethanes, thermoplastic copolyesters, thermoplastic polyamides, and *olefinic* thermoplastic elastomer copolymers (OTPEs), otherwise known as thermoplastic olefin block copolymers (TOBCs).

*OTPEs (TOBCs),* which are the focus of the present invention, are a class of olefinic polymers having crystallizable blocks, e.g. polyethylene blocks with low, if any, comonomer content and high melting temperature, alternating with amorphous blocks, e.g. based on propylene, ethylene/olefin mixtures with high comonomer content, etc., and a low glass transition temperature.

Olefinic thermoplastic elastomer copolymers can therefore be distinguished from the other classes of thermoplastic elastomer copolymers, in that both the soft segments and the hard segments are formed by olefinic repeating units. An olefinic thermoplastic elastomer consists essentially of olefinic repeating units, such as propylene and ethylene repeating units, and forms a cross-linked network of olefinic hard segments in a matrix of olefinic soft segments. Essentially in this respect means that the olefin repeating unit content of the copolymer is higher than 90 wt.%, preferably higher than 95 wt.%, even more preferably higher than 99 wt.%, with the remainder being derived from copolymerizable non-olefinic monomers, initiators, chain transfer agents, and/or other functional groups. Preferably, the amount of non-olefinic repeating units in the olefinic thermoplastic elastomer is not higher than 10 wt.%, more preferably not higher than 5 wt.%, most preferably not higher than 1 wt.%. It is especially preferred that the olefinic thermoplastic elastomer does not comprise any non-olefinic repeating units. The olefinic thermoplastic elastomer copolymers belong to the general class of polyolefins, and can be distinguished from the general class of polyolefins by their capability to phase separate into a structure comprising physical crosslinks of hard segments in a matrix of soft segments.

The thermoplastic elastomer copolymers are to be seen separately from other classes of thermoplastic elastomers, such as thermoplastic vulcanizates (e.g. Elastron, Forprene, Santoprene, Trefsin, etc.) and thermoplastic polyolefinelastomers. Such thermoplastic elastomers are in fact themselves mixtures of multiple components. For example, thermoplastic polyolefinelastomers are mixtures of a thermoplastic polymer such as polypropylene or polyethylene and pre-cross-linked rubber particles.

As opposed to conventional vulcanized and/or otherwise cross-linked membranes, which require chemical cross-linking for their mechanical properties, the membranes according to the invention can be molten and reshaped. Furthermore, as no cross-linking chemicals are required, less toxic chemicals are required in the production process.

Single layer expansion tank membranes from a thermoplastic elastomer copolymer, the elastomer copolymer being a thermoplastic polyurethane (TPU) are suggested in WO 2013/151441. However, although such membranes may have the required flexibility and durability, they are relatively permeable to water.

Polyolefins are known for their water barrier properties. That is why in multi-layer expansion tank membranes, there usually is a polyolefin layer providing the water barrier properties.

Surprisingly, it is not needed to utilize multiple layers for an expansion tank membrane when it is required to take advantage of the water barrier properties of polyolefins. By utilizing a polyolefin which is an olefinic thermoplastic elastomer copolymer, a single layer membrane for an expansion tank can be obtained with a decreased water vapor permeability as compared to a single layer expansion tank membrane comprising only non-olefinic or partially olefinic thermoplastic elastomer copolymers.

A method for manufacturing a single layer membrane for an expansion tank, comprises
a) heating an olefinic thermoplastic elastomer copolymer, and optionally mixing with a non-olefinic or partially olefinic thermoplastic elastomer copolymer and/or a further polyolefin,
b) injection moulding the heated copolymer or mixture of a) into a membrane mould to form the single layer membrane,
c) optionally cooling the membrane in the membrane mould,
d) releasing the membrane from the mould.
Heating and mixing may be performed in an extruder. Preferably, in step a) the polyolefin and the thermoplastic elastomer copolymer are heated to a temperature of between 200 - 220 °C. The injection moulding in step b) preferably takes place at a pressure of between 130 - 150 bar, and an injection time of between 1 seconds and 4 seconds.

### Description of embodiments

Preferably, the membrane is a diaphragm membrane. Such a membrane has a substantially spherical circumference which can be clenched between two halves of an expansion tank. The diaphragm membrane may have a substantially hat-shaped form in rest, comprising an outer region which is substantially flat and an inner region which is at least partially curved and defines a volume. The thickness of such a membrane is preferably at least 0.8 mm. It is noted that a diaphragm membrane differs from a bladder or balloon shaped membrane.

Preferably, the olefinic thermoplastic elastomer copolymer comprises propylene repeating units with a propylene content of at least 80 wt.%. Preferably, the polyolefin is a copolymer of ethylene and propylene, because of polypropylene's excellent water barrier properties as compared to other polyolefins. More preferably, the copolymer has a Melt Flow Index of between 1 and 20 g/10 min according to ASTM D1238 (200 °C/2.16 kg).

Preferably, the olefinic thermoplastic elastomer copolymer comprises isotactic propylene repeat units with random ethylene distribution.

Preferably, the olefinic thermoplastic elastomer copolymer has an ethylene content of between 4 and 20 wt%, preferably between 13 and 18 wt%, most preferably between 15 and 17 wt%. Copolymers with these compositions have an optimal balance between low permeability for gas and water, and mechanical properties.

Preferably, the membrane comprises a further polyolefin. The further polyolefin itself does not form a phase separated structure of hard segments and soft segments, but may be incorporated in the soft segment matrix of the olefinic thermoplastic elastomer copolymer. The further polyolefin can be any polymer or copolymer consisting essentially of olefinic repeating units, i.e. C₂ - Cₓ olefinic repeating units, preferably C₂ - C₄ olefinic repeating units, more preferably propylene and/or ethylene repeating units. Essentially in this respect means that the olefin repeating unit content of the (co)polymer is higher than 90%, preferably higher than 95%, even more preferably higher than 99%, with the remainder being derived from copolymerizable non-olefinic monomers. For instance, the polymer may comprise a small amount of non-olefinic moieties. For example, the polyolefin may be grafted with other monomeric units, such as maleic anhydride. Preferably, the amount of non-olefinic repeating units in the further polyolefin is not higher than 10 weight%, more preferably not higher than 5 weight%, most preferably not higher than 1 weight%. Preferably, the polyolefin does not comprise any non-olefinic repeating units. Most preferably, the further polyolefin is polypropylene, as polypropylene has excellent water barrier properties.

Preferably, the membrane further comprises a non-olefinic or partially olefinic thermoplastic elastomer copolymer. Addition of such a non-olefinic or partially olefinic thermoplastic elastomer increases processability of the polymer mixture. Examples of non-olefinic or partially olefinic thermoplastic elastomer copolymers are styrenic block copolymers, thermoplastic polyurethanes, thermoplastic copolyesters, and thermoplastic polyamides.

Styrenic block copolymers are block copolymers of styrene and a diene, such as polyisoprene, and/or polybutadiene. The diene may be hydrogenated. The block copolymers are multiblock copolymers, such as triblock copolymers. Examples of styrenic block copolymers include poly(styrene-co-ethylene/propylene-styrene) (SEPS), poly(styreneisoprene-styrene) (SIS), poly(styrene-co-ethylene/butylene-styrene) (SEBS), and poly(styrene-butylene-styrene) (SBS). The polymers may be linear or branched. Moreover, they may be mixtures of linear and branched block copolymers, and/or mixtures comprising diblock copolymers having a single soft segment and a single hard segment. Such styrenic block copolymers are manufactured by, e.g. Kraton, Kuraray, TSRC, and LCY.

Thermoplastic polyurethanes (TPUs) are block copolymers consisting of alternating sequences of hard and soft segments or domains formed by the reaction of: (1) diisocyanates with short-chain diols (chain extenders) and (2) diisocyanates with long-chain diols. By varying the ratio, structure, and/or molecular weight of the reaction compounds, a variety of differently structured TPUs can be produced. This allows for fine tuning of the structure to the desired final properties of the material. For example, a greater ratio of hard to soft segments will result in a more rigid thermoplastic polyurethane (TPU). Desmopan or Elastollan are examples of commercially available TPUs. Preferably, the TPU comprises a polytetramethylene ether glycol (PTMEG) polyol.

Thermoplastic copolyesters are multiblock copolymers of chemically different polyester and polyether segments connected by ester linkages. A typical example of a poly (ether ester) consists of poly(butylene terephthalate) (PBT) as the hard and short segment connected by ester groups with flexible and long poly(tetramethylene oxide) segments.

Thermoplastic polyamides finally, are block copolymers with hard and soft segments, the block copolymer comprising amide bonds. They are for example based on nylon and polyethers or polyesters.

These styrenic block copolymers, thermoplastic polyurethanes, thermoplastic copolyesters, and thermoplastic polyamides are all non-olefinic or partially olefinic, wherein non-olefinic means that these polymers do not comprise any olefinic repeating units. Partially olefinic means that the polymers, although they may comprise olefinic repeating units, also comprise non-olefinic repeating units. Thus, a non-olefinic or partially olefinic thermoplastic elastomer copolymer comprises a significant amount of non-olefinic repeating units. Significant in this respect means more than 10 wt.% of non-olefinic repeating units. All of the above classes of thermoplastic elastomer copolymers comprise non-olefinic repeating units.

Preferably, the non-olefinic or partially olefinic thermoplastic elastomer copolymer is a styrenic block copolymer. More preferably, the styrenic block copolymer is a block copolymer of styrene and isoprene, and most preferably a poly(styrene-isoprene-styrene) triblock copolymer or a mixture of said triblock copolymer with a diblock copolymer. Ideally the block copolymer has a Melt Flow Index (ASTM D1238, 200 °C/5kg) of between 8 and 19 g/10 min.

Preferably, the poly(styrene-isoprene-styrene) triblock copolymer has a polystyrene content of between 10 and 21 wt.%, preferably between 12 and 19 wt.%, most preferably of between 14 and 17 wt.%. Without wishing to be bound by theory, it is speculated that due to the low amount of the polystyrene blocks as compared to the middle isoprene block, the triblock copolymer is very flexible, which results in adequate mechanical properties for expansion tank membranes.

The composition used for the membrane may comprise further components, i.e. additives, up to 50 % by weight. Such additives may include fillers, colorants, and further polymers and the like.

Preferably, the single layer expansion tank membrane does not comprise ethylene vinyl alcohol (EVOH). EVOH has excellent gas-barrier properties. However, its mechanical properties are poor and it is not resistant to water and/or water vapor. Therefore, EVOH is often used as a middle layer in multilayer expansion tank membranes, wherein the outer layers provide the water barrier. Moreover, it is a relatively expensive polymer. It may be possible to blend EVOH or EVOH copolymers into the polymer mixture that is used to produce a single layer expansion tank membrane. Addition of EVOH or EVOH copolymers in that way may be advantageous for the properties of an expansion tank membrane. However, it is a relatively expensive polymer. Therefore, use of EVOH or EVOH copolymers is not preferred.

Preferably, the single layer expansion tank membrane does not comprise an oil. Oils are often added to polymer blends in order to increase processability, e.g. as processing oils. However, such oils may leak out of the membrane. Especially in the case of potable water applications, this is undesirable.

Preferably, the membrane comprises at least 10%, more preferably at least 20% of olefinic thermoplastic elastomer copolymer.

Preferably, the membrane consists of 10 - 60 wt.% non-olefinic or partially olefinic thermoplastic elastomer copolymer, 10 - 90 wt.% of olefinic thermoplastic elastomer copolymer, 0 - 80 wt.% of further polyolefin, and 0 - 20 wt. % additives, the total adding up to 100 wt.%.

Preferably, the membrane consists of one or more olefinic thermoplastic elastomer copolymers. Because such a membrane consists of only one type of olefinic material, recycling is very favourable.

Alternatively, the membrane consists of a mixture of one or more olefinic thermoplastic elastomer copolymers and a further polyolefin.

The terms "a"/"an", as used herein, are defined as one or more than one. The terms including and/or having, as used herein, are defined as comprising (i.e., open language, not excluding other elements or steps). The mere fact that certain measures are recited in mutually different dependent claims does not indicate that a combination of these measures cannot be used to advantage.

### Brief description of the figures

Figure 1 is a schematical side view of a cylindrical expansion tank.
Figure 2a is a 3D view of a rectangular expansion tank.
Figure 2b is 3D view of the two housing parts of a rectangular expansion tank.
Figure 2c is a 3D view of a cross-section of a rectangular expansion tank with a membrane.
Figure 2d is a schematical cross-section of a rectangular expansion tank with a membrane.

### Detailed description of the figures

Figure 1 is a schematical side view of a cylindrical expansion tank, with a first housing part (1') and a second housing part (2').

Figure 2a is a 3D view of a rectangular expansion tank. In figure 2b, the first housing part (1), and second housing part (2) are indicated.

Figure 2c is a 3D view of a cross-section of a rectangular expansion tank with a membrane. The first housing part (1), second housing part (2), and the membrane (3) are indicated in the figure.

Figure 2d is a schematical cross-section of a rectangular expansion tank with a membrane. The first housing part (1), second housing part (2), the membrane (3), and the peripheral edge (4) of the membrane are indicated. The edge (4) is configured to be clenched between the first housing part (1) and the second housing part (2) of the expansion tank.

### Examples

Expansion tank membranes were produced by heating the materials for the membrane in an extruder to a temperature of 210°C, injection moulding the material or mixture of materials into a membrane mould at a pressure of 140 bar, cooling the mixture in the membrane mould, and releasing the membrane from the mould.

Membranes with a thickness of between 1 and 2.5 mm and a diameter of about 30 cm were subjected to cyclic pressure testing according to NEN 13831:2007. Durability was determined by repeating the cyclic pressure test for 1000 cycles, after which the gas side of the vessel was filled with air to 1,5 bar. If the pressure drop within the following hour did not exceed 0,15 bar, the test was continued for another 500 cycles.

N₂ and H₂O permeation rates were determined separately from the cyclic testing. The used method was a combined permeation test by measuring over time the diffusion of N₂ and H₂O in one test unit. In the test unit a membrane is placed between a vacuum chamber and a chamber filled with water and nitrogen under pressure. The rate of diffusion is measured by measuring the weight and pressure over time. The relation between the pressure reduction and weight in time is the calculated permeation coefficient of the membrane for water and nitrogen.

**Table 1.**

| | | Tensile strength (N/mm2) | Elongation at break (%) | Tear strength (N/mm) | durability (cycles) | H₂O permeation (g/m²/hr*mm) | | N₂ permeation (g/m²/hr*mm) | |
|---|---|---|---|---|---|---|---|---|---|
| | Composition | | | | | 30 °C | 70 °C | 30 °C | 70 °C |
| 1 | 100wt% BiiR* | 8.5 | 1050 | 18 | >60000 | 0.05 | 0.47 | 0.006 | 0.31 |
| 2 | 100wt% SBR* | | | | >50000 | 0.23 | 1.31 | 0.022 | 0.083 |
| 3 | 100wt% TPU* (a) | 44 | 1000 | 115 | >50000 | 0.31 | 5.83 | 0.006 | 0.31 |
| 4 | 100wt% TPU* (b) | 56.3 | 1000 | 98 | >30000 | 0.31 | 2.63 | 0.004 | 0.021 |
| 5 | 80 wt% OTPE1 | | | | | | | | |
| | 20 wt% OTPE2 | | | | | 0.12 | 0.83 | 0.018 | 0.086 |
| 6 | 64 wt% OTPE1 | | | | | | | | |
| | 18 wt% OTPE2 | | | | | | | | |
| | 18 wt% PP | 17.2 | 1445 | 63 | >10000 | 0.17 | 0.75 | 0.014 | 0.074 |
| 7 | 38wt% SIS | | | | | | | | |
| | 38wt% PP | | | | | | | | |
| | 23wt% OTPE1 | | | | >8000 | | | | |
| | (a') | 11.10 | 1075.00 | 40.00 | <10000 | 0.09 | 0.63 | 0.02 | 0.083 |
| 8 | 38wt% SIS | | | | | | | | |
| | 38wt% PP | | | | | | | | |
| | 23wt% OTPE1 | | | | >15000 | | | | |
| | (b') | 14.9 | 1150 | 43 | <43000 | 0.12 | 0.49 | 0.005 | 0.03 |
| 9 | 25wt% SIS | | | | | | | | |
| | 25wt% PP | | | | | | | | |
| | 50wt% OTPE1 | 11.9 | 1444 | 40 | >10000 | 0.11 | 0.88 | 0.02 | 0.078 |
| 7 | 100 wt% | | | | | | | | |
| | Elastron* | 4 | 850 | 23 | >1000 | <0.1 | <1.0 | >0.025 | >0.085 |
| 8 | 100 wt% | | | | | | | | |
| | Forprene* | 4.8 | 550 | 23 | >15000 | <0.1 | <1.0 | >0.025 | >0.085 |

| | | | | | | | | | |
|---|---|---|---|---|---|---|---|---|---|
| * comparative examples a and b, a' and b' are repeat measurements of similar compositions | | | | | | | | | |

### Materials

All materials are standard commercially available products.
BiiR: Vulcanized bromobutyl rubber
SBR: Vulcanized SBR rubber
TPU: Polyether urethane, MDI (Methylene diphenyl diisocyanate) + PTMEG (polytetramethylene ether glycol) based
SIS: Poly(styrene-isoprene-styrene) triblock copolymer with a MFI of between 8.5 and 18.5 g/10 min as measured by ASTM D1238 (200 °C/5kg), and a polystyrene content of between 14.0 and 17.0 mass%
PP: polypropylene with a MFI of between 10 and 100 g/10 min as measured by ASTM D1238 (200 °C/2.16 kg)
OTPE1: Olefinic thermoplastic elastomer copolymer with a MFI of 1.4 g/10 min as measured by ASTM D1238 (190 °C/2.16 kg), comprising isotactic propylene repeat units with random ethylene distribution, and an ethylene content of 16 wt%
OTPE2: Olefinic thermoplastic elastomer copolymer with a MFI of between 1 and 20 g/10 min as measured by ASTM D1238 (190 °C/2.16 kg), comprising isotactic propylene repeat units with random ethylene distribution, and an ethylene content of 6 wt%

### Conclusion

Experiment 5, wherein the membrane consists of a mixture of OTPEs, has an improved (i.e. lower) water permeation rate as compared to a membrane made of only thermoplastic polyurethane. Moreover, the water permeation rate is comparable to that of a standard SBR membrane. Experiment 6 indicates that a similar mixture, further comprising PP, has an improved high temperature water permeation rate, and improved nitrogen permeation (at both temperatures) as compared to Experiment 5. Compositions that further comprise SIS (experiments 7, 8, 9) were easier to process while also having excellent barrier properties.

## Claims

1. Expansion tank comprising a single layer membrane, the membrane comprising at least one thermoplastic olefin block copolymer.

2. Expansion tank according to claim 1, wherein the thermoplastic olefin block copolymer is a copolymer of ethylene and propylene, preferably with a propylene content of at least 80 wt.%, more preferably with a Melt Flow Index of between 1 and 20 g/10 min according to ASTM D1238 (200 °C/2.16 kg).

3. Expansion tank according to claim 2, wherein the thermoplastic olefin block copolymer comprises isotactic propylene repeat units with random ethylene distribution, preferably wherein the thermoplastic olefin block copolymer has an ethylene content of between 4 and 20 wt%, preferably between 13 and 18 wt%, more preferably between 15 and 17 wt%.

4. Expansion tank according to any one of the preceding claims, comprising a further polyolefin.

5. Expansion tank according to any one of the preceding claims, further comprising a non-olefinic or partially olefinic thermoplastic elastomer copolymer, preferably wherein the non-olefinic or partially olefinic thermoplastic elastomer copolymer is a styrenic block copolymer.

6. Expansion tank according to claim 5, wherein the styrenic block copolymer is a block copolymer of styrene and isoprene, preferably a poly(styrene-isoprene-styrene) triblock copolymer or mixture thereof with a diblock copolymer, more preferably with a MFI of between 8 and 19 g/10 min as measured by ASTM D1238 (200 °C/5 kg).

7. Expansion tank according to any one of the preceding claims, not comprising EVOH or EVOH copolymers.

8. Expansion tank according to any one of the preceding claims, not comprising an oil.

9. Expansion tank according to any one of the preceding claims, wherein the membrane comprises at least 10%, more preferably at least 20% of thermoplastic olefin block copolymer.

10. Expansion tank according to any one of the preceding claims, wherein the membrane consists of
a) 10 - 60 wt.% non-olefinic or partially olefinic thermoplastic elastomer copolymer,
b1) 10 - 90 wt.% thermoplastic olefin block copolymer,
b2) 0 - 80 wt.% further polyolefin,
c) 0 - 20 wt. % additives,
the total adding up to 100 wt.%.

11. Expansion tank according to any one of claims 1 - 3, wherein the membrane consists of one or more thermoplastic olefin block copolymers.

12. Expansion tank according to any one of claims 1 - 4, wherein the membrane consists of a mixture of one or more thermoplastic olefin block copolymers and a further polyolefin.

## Patentansprüche

1. Expansionstank umfassend eine einschichtige Membran, wobei die Membran wenigstens ein thermoplastisches Olefin-Blockcopolymer umfasst.

2. Expansionstank nach Anspruch 1, wobei das thermoplastische Olefin-Blockcopolymer ein Copolymer von Ethylen und Propylen ist, vorzugsweise mit einem Propylengehalt von wenigstens 80 Gew.-%, bevorzugter mit einem Schmelzflussindex von zwischen 1 und 20 g/10 min nach ASTM D1238 (200 °C/2,16 kg).

3. Expansionstank nach Anspruch 2, wobei das thermoplastische Olefin-Blockcopolymer isotaktische Propylen-Wiederholungseinheiten mit statistischer Ethylenverteilung umfasst, wobei das thermoplastische Olefin-Blockcopolymer vorzugsweise einen Ethylengehalt von zwischen 4 und 20 Gew.-%, vorzugsweise zwischen 13 und 18 Gew.-%, bevorzugter zwischen 15 und 17 Gew.-%, aufweist.

4. Expansionstank nach einem der vorstehenden Ansprüche, umfassend ein weiteres Polyolefin.

5. Expansionstank nach einem der vorstehenden Ansprüche, ferner umfassend ein nicht-olefinisches oder teilweise olefinisches thermoplastisches Elastomercopolymer, wobei das nicht-olefinische oder teilweise olefinische thermoplastische Elastomercopolymer vorzugsweise ein styrolisches Blockcopolymer ist.

6. Expansionstank nach Anspruch 5, wobei das styrolische Blockcopolymer ein Blockcopolymer von Styrol und Isopren ist, vorzugsweise ein Poly(styrol-isopren-styrol)-Triblockcopolymer oder ein Gemisch davon mit einem Diblockcopolymer, bevorzugter mit einem MFI von zwischen 8 und 19 g/10 min, gemessen nach ASTM D1238 (200 °C/5 kg).

7. Expansionstank nach einem der vorstehenden Ansprüche, der kein EVOH oder EVOH-Copolymere umfasst.

8. Expansionstank nach einem der vorstehenden Ansprüche, der kein Öl umfasst.

9. Expansionstank nach einem der vorstehenden Ansprüche, wobei die Membran wenigstens 10 %, bevorzugter wenigstens 20 % , an thermoplastischem Olefin-Blockcopolymer umfasst.

10. Expansionstank nach einem der vorstehenden Ansprüche, wobei die Membran besteht aus
a) 10-60 Gew.-% an nicht-olefinischem oder teilweise olefinischem thermoplastischem Elastomercopolymer,
b1) 10-90 Gew.-% an thermoplastischem Olefin-Blockcopolymer,
b2) 0-80 Gew.-% an weiterem Polyolefin,
c) 0-20 Gew. % Zusatzstoffen,
wobei die Summe 100 Gew.-% beträgt.

11. Expansionstank nach einem der Ansprüche 1-3, wobei die Membran aus einem oder mehreren thermoplastischen Olefin-Blockcopolymeren besteht.

12. Expansionstank nach einem der Ansprüche 1-4, wobei die Membran aus einem Gemisch von einem oder mehreren thermoplastischen Olefin-Blockcopolymeren und einem weiteren Polyolefin besteht.

## Revendications

1. Vase d'expansion comprenant une membrane monocouche, la membrane comprenant au moins un copolymère bloc d'oléfine thermoplastique.

2. Vase d'expansion selon la revendication 1, dans lequel le copolymère bloc d'oléfine thermoplastique est un copolymère d'éthylène et de propylène, de préférence avec une teneur en propylène d'au moins 80 % en poids, mieux encore avec un indice de fluidité à chaud compris entre 1 et 20 g/10 min selon la norme ASTM D1238 (200 °C/2,16 kg).

3. Vase d'expansion selon la revendication 2, dans lequel le copolymère bloc d'oléfine thermoplastique comprend des motifs répétitifs de propylène isotactique avec une distribution aléatoire d'éthylène, de préférence dans lequel le copolymère bloc d'oléfine thermoplastique a une teneur en éthylène comprise entre 4 et 20 % en poids, de préférence entre 13 et 18 % en poids, mieux encore entre 15 et 17 % en poids.

4. Vase d'expansion selon l'une quelconque des revendications précédentes, comprenant en outre une polyoléfine.

5. Vase d'expansion selon l'une quelconque des revendications précédentes, comprenant en outre un copolymère élastomère thermoplastique non oléfinique ou partiellement oléfinique, le copolymère élastomère thermoplastique non oléfinique ou partiellement oléfinique étant de préférence un copolymère à blocs styréniques.

6. Vase d'expansion selon la revendication 5, dans lequel le copolymère à blocs styréniques est un copolymère bloc de styrène et d'isoprène, de préférence un copolymère tribloc de poly(styrène-isoprène-styrène) ou un mélange de celui-ci avec un copolymère dibloc, mieux encore avec un MFI compris entre 8 et 19 g/10 min tel que mesuré par la norme ASTM D1238 (200 °C/5 kg).

7. Vase d'expansion selon l'une quelconque des revendications précédentes, ne comprenant pas d'EVOH ni de copolymères d'EVOH.

8. Vase d'expansion selon l'une quelconque des revendications précédentes, ne comprenant pas d'huile.

9. Vase d'expansion selon l'une quelconque des revendications précédentes, dans lequel la membrane comprend au moins 10 %, mieux encore au moins 20 % de copolymère bloc d'oléfine thermoplastique.

10. Vase d'expansion selon l'une quelconque des revendications précédentes, dans lequel la membrane est constituée par
a) 10 - 60 % en poids de copolymère élastomère thermoplastique non oléfinique ou partiellement oléfinique,
b1) 10 - 90 % en poids de copolymère bloc d'oléfine thermoplastique,
b2) 0 - 80 % en poids d'une autre polyoléfine,
c) 0 - 20 % en poids d'additifs,
le total faisant 100 % en poids.

11. Vase d'expansion selon l'une quelconque des revendications 1 à 3, dans lequel la membrane est constituée par un ou plusieurs copolymères blocs d'oléfine thermoplastique.

12. Vase d'expansion selon l'une quelconque des revendications 1 à 4, dans lequel la membrane consiste en un mélange d'un ou plusieurs copolymères blocs d'oléfine thermoplastique et d'une autre polyoléfine.
